(19) Europäisches Patentamt
European Patent Office
Office européen des brevets

(11) **EP 4 251 959 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **21802294.5**

(22) Anmeldetag: **28.10.2021**

(51) Internationale Patentklassifikation (IPC):
*G01F 23/284* (2006.01)      *G01F 23/292* (2006.01)
*G01S 13/88* (2006.01)      *G01S 13/86* (2006.01)

(52) Gemeinsame Patentklassifikation (CPC):
**G01F 23/284; G01F 23/292; G01S 13/867; G01S 13/88**

(86) Internationale Anmeldenummer:
**PCT/EP2021/080026**

(87) Internationale Veröffentlichungsnummer:
**WO 2022/111942 (02.06.2022 Gazette 2022/22)**

(54) **FÜLLVOLUMEN-MESSUNG**

FILL VOLUME MEASUREMENT

MESURE DE VOLUME DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2020 DE 102020131565**

(43) Veröffentlichungstag der Anmeldung:
**04.10.2023 Patentblatt 2023/40**

(73) Patentinhaber: **Endress+Hauser SE+Co. KG
79689 Maulburg (DE)**

(72) Erfinder:
• **KLÖFER, Peter
79585 Steinen (DE)**
• **MAYER, Winfried
89290 Buch (DE)**

(74) Vertreter: **Endress + Hauser Group Services (Deutschland) AG+Co. KG
Colmarer Straße 6
79576 Weil am Rhein (DE)**

(56) Entgegenhaltungen:
| | |
|---|---|
| EP-A1- 2 930 476 | EP-A1- 3 171 138 |
| DE-A1- 102012 104 090 | DE-A1- 102018 102 366 |
| JP-A- 2004 226 264 | US-A1- 2018 106 602 |

**EP 4 251 959 B1**

**Beschreibung**

Die Erfindung betrifft ein Mess-System und ein Verfahren zur Bestimmung eines Füllvolumens eines Füllgutes in einem Behälter.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter, etwa einen Füllstand, einen Durchfluss, einen Druck, eine Temperatur, einen pH-Wert, ein Redoxpotential oder eine Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich berührungslose Messverfahren etabliert, da sie robust und wartungsarm sind. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz). Ein etabliertes Messverfahren bildet hierbei FMCW *("Frequency Modulated Continuous Wave")*. Beschrieben wird das FMCW-basierte Füllstands-Messverfahren beispielsweise in der Offenlegungsschrift DE 10 2013 108 490 A1.

Mittels des FMCW-Verfahrens ist es möglich, die Entfernung bzw. den Füllstand zumindest punktuell zu messen. Dabei richtet sich der Punkt, an dem der Füllstand gemessen wird, nach der Ausrichtung der Sende-/Empfangs-Antenne bzw. nach der Richtung ihrer Strahlkeule (aufgrund der allgemein reziproken Eigenschaften von Antennen ist die Charakteristik bzw. der Strahlwinkel der Strahlkeule der jeweiligen Antenne unabhängig davon, ob sie sendet oder empfängt). Bei dem Begriff *"Winkel"* oder *"Strahlwinkel"* handelt es sich im Rahmen der vorliegenden Patentanmeldung um denjenigen Winkel, unter dem die Strahlkeule ihre maximale Sende-Intensität bzw. Empfangs-Empfindlichkeit aufweist.

Im Falle von flüssigen Füllgütern, deren Füllstand homogen ist, ist eine punktuelle Füllstandsmessung ausreichend. In diesen Fällen ist das Füllstandsmessgerät so ausgerichtet, dass die Strahlkeule der Antenne in etwa senkrecht nach unten gen Füllgut gerichtet ist und die Entfernung zum Füllgut bestimmt. Sofern die Behältergeometrie des Behälter-Inneren bekannt ist, kann auf Basis des punktuell ermittelten Füllstandswertes und der bekannten Behältergeometrie außerdem das Füllvolumen des Füllgutes im Behälter ermittelt werden. Hierzu kann die Behälter-Geometrie tabellarisch als so genannte Tanktabelle vorliegen. Dabei verknüpft die Tanktabelle den Füllstandswert mit dem korrespondierenden Füllvolumen. Erstellt werden kann die Tanktabelle durch entsprechende Kalibrations-Befüllungen mit bekannten Füllgut-Mengen bzw. -Volumina des flüssigen Füllgut-Typs. Auf theoretischem Wege kann die Tanktabelle erstellt werden, wenn die Behältergeometrie bzw. deren Abmessungen genau bekannt sind.

Bei feststoffartigen Füllgütern, wie Kies oder Getreide, kann der Füllstand beispielsweise aufgrund von Schüttgutkegeln inhomogen sein, so dass der vom Füllstandsmessgerät ermittelte, punktuelle Füllstandswert nur bedingt aussagekräftig ist. Speziell in solchen Fällen ist es daher erstrebenswert, die Entfernung bzw. den Füllstand in Form eines dreidimensionalen Füllstand-Profils bestimmen zu können. Um dies zu ermöglichen, muss das Füllstandsmessgerät ausgelegt sein, eingehende Radar-Signale einem zugehörigen Raumwinkel zuordnen zu können. Erreicht werden kann dies beispielsweise mittels des Prinzips der digitalen Strahlformung, insbesondere mittels des MIMO-Prinzips (*"Multiple Input Multiple Output"*).

Diesem Prinzip liegt eine Antennen-Anordnung zugrunde, die aus einer Vielzahl an Sende- und Empfangs-Antennen besteht. Dabei wird über jede Sende-Antenne ein zu den anderen Sende-Antennen orthogonales Radar-Signal ausgesendet, wobei das entsprechend reflektierte Signal jeweils über jede Empfangsantenne empfangen und ggf. digitalisiert wird, um aus den digitalisierten Empfangs-Signalen das Füllstand-Profil zu ermitteln.

Insbesondere zeichnet sich das MIMO-Verfahren durch seine virtuell vergrößerte Apertur aus. Hierdurch erhöhen MIMO-basierte Radarsysteme gegenüber Systemen ohne virtuell vergrößerte Apertur das räumliche Auflösungsvermögen. Nachteilig an digitalen Strahlformungsverfahren ist jedoch, dass es zu Mehrdeutigkeiten und Winkelfehlern kommen kann. Nach dem Stand der Technik kann die gesamte, zur Umsetzung des MIMO-Prinzips erforderliche Hardware bereits so kompakt integriert werden, dass die Sende- und Empfangs-Antennen als Patch-Antennen zusammen mit der Sende-/Empfangs-Einheit umfasst, auf einer gemeinsamen Leiterplatte bzw. sogar als gemeinsam gekapselter IC (*"Integrated Circuit"*) untergebracht sind. Näher beschrieben werden MIMO-basierte Radar-Systeme beispielsweise in "MIMO Radar Signal Processing" (Jian Li), 2009. Ein Radar-basiertes Füllstandsmessgerät, das mittels mechanischer oder elektronischer Strahlschwenkung in der Lage ist, ein Raumwinkel-abhängiges Füllstands-Profil zu erstellen, wird in der Veröffentlichungsschrift US 20180106602 A1 gezeigt.

Auch bei feststoffartigen Füllgütern ist es von Interesse, neben dem Füllstands-Profil auch das Füllvolumen im Behälter bestimmen zu können. Bei rauen Füllgut-Oberflächen bzw. entsprechenden Füllgütern sind Tanktabellen jedoch nicht nutzbar, um das Füllvolumen zu bestimmen, da Tanktabellen-basierte Füllvolumen-Bestimmung eine glatte, horizontale Füllgut-Oberfläche erfordert, wie es lediglich bei Flüssigkeiten der Fall ist.

Zudem bildet sich der Behälter bei Feststoffen je nach Anwendung und Art des Füllgutes häufig nicht aus einem geometrisch simplen Körpern aus: Zur Vermeidung von Füllgut-Anhaftungen, zum einfacheren Befüllen und Entleeren, oder aus Stabilitätsgründen sind die Behälterwände oft gekrümmt, schief oder wellig. Außerdem umfassen Behälter oftmals Einbauten wie Stützen, Heiz-, Reinigungs- oder Wartungseinrichtungen. Eine theoretische Herleitung der Geometrie des Behälter-Inneren anhand der Oberflächenkontur ist daher nur bei exakt bekannter Behältergeometrie möglich. Nachträgliche Veränderungen durch Umbauten und Nachrüstungen erschweren es abermals, die Behältergeometrie aus Planungsunterlagen zu ermitteln.

In der Veröffentlichungsschrift DE 10 2018 102 366 A1 wird ein Radar-basiertes Füllstandsmessgerät beschrieben, das zu Redundanzzwecken zusätzlich eine ToF-Kamera ("*Time of Flight*") umfasst. Die Kamera ist neben dem Radargerät angeordnet.

Es ist eine Aufgabe der Erfindung, ein Mess-System bereitzustellen, mittels dem auch bei nicht-flüssigen Füllgütern deren Füllvolumen im Behälter bestimmt werden kann.

Die Erfindung löst diese Aufgabe durch ein Mess-System zur Bestimmung eines Füllvolumens eines Füllgutes in einem Behälter, das folgende Komponenten umfasst:

- Ein Radar-basiertes Füllstandsmessgerät zur Erstellung eines dreidimensionalen Füllstands-Profils der Füllgut-Oberfläche im Behälter, mit

  ◦ einer Antennen-Anordnung, mittels welcher gemäß eines digitalen Strahlformungsprinzips, wie beispielsweise dem MIMO-Prinzip Radar-Signale in Richtung des Füllguts aussendbar sind, und mittels welcher nach Reflektion des Radar-Signals an der Füllgut-Oberfläche entsprechende Empfangs-Signale empfangbar sind,
  ◦ einer Sende-/Empfangs-Einheit, die ausgelegt ist, um die Radar-Signale gemäß des jeweiligen Strahlformungs-Prinzips zu erzeugen, und um gemäß dieses Strahlformungs-Prinzips zumindest anhand der Empfangs-Signale das Raumwinkel-abhängige Füllstands-Profil zu erstellen, und

- eine 3D-Kamera, die derart positionierbar ist, um zumindest ein 3D-Bild von zumindest einem Teilbereich des Behälter-Inneren aufzunehmen, wobei die 3D-Kamera als eine Komponente der Antennen-Anordnung ausgelegt oder derart um eine insbesondere kreisrunde Durchführung des Füllstandsmessgerätes (1) herum ausgebildet ist, so dass die 3D-Kamera durch die Durchführung hindurch in das Innere des Behälters richtbar ist,

- eine Auswertungs-Einheit, die ausgelegt ist,

  ◦ um anhand des zumindest einen 3D-Bildes einen Datensatz, der die Geometrie von zumindest dem Teilbereich des Behälter-Inneren repräsentiert, zu erstellen, und
  ◦ um anhand des Datensatzes und anhand des Füllstands-Profils das Füllvolumen zu bestimmen.

Dabei ist es notwendig, die 3D-Bilder aufzunehmen, wenn der Behälter zumindest im entsprechenden Teilbereich leer ist.

Die Auswertungs-Einheit kann als Bestandteil des Füllstandsmessgerätes bzw. der Sende-/Empfangs-Einheit ausgelegt werden.

Korrespondierend zum erfindungsgemäßen Mess-System bzw. dem erfindungsgemäßen Füllstandsmessgerät wird die Aufgabe, die der Erfindung zugrunde liegt, außerdem durch ein entsprechendes Verfahren zum Betrieb des Füllstandsmessgerätes gelöst. Demnach umfasst das Verfahren folgende Verfahrensschritte:

- Aufnahme von zumindest einem 3D-Bild von zumindest einem Teilbereich des Behälter-Inneren mittels der 3D-Kamera,
- Erstellung eines Datensatzes, der die Geometrie von zumindest dem Teilbereich des Behälter-Inneren repräsentiert, anhand des zumindest einen 3D-Bildes,
- Erstellung eines Raumwinkel-abhängigen Füllstands-Profils der Füllgut-Oberfläche mittels des Füllstandsmessgerätes, und
- Bestimmung des Füllvolumens anhand des Datensatzes und anhand des Füllstands-Profils.

Im Rahmen dieser Anmeldung fällt unter den Begriff "*3D-Kamera*" jedes System, mittels dem in einem ausgewählten Bildbereich die jeweiligen Entfernungswerte zum nächstliegenden Objekt als entsprechender Pixelwert aufnehmbar ist. Demnach können hierzu beispielsweise sogenannte ToF-Kameras ("*Time of Flight*") eingesetzt werden, die entsprechende halbleiterbasierte Sensoren (auch bekannt als PMD-Sensoren, "*Photonic Mixing Device*") umfassen. Dieselbe Funktionalität kann jedoch beispielsweise auch mittels einer sogenannten Lichtfeld-Kamera oder zumindest zwei zusammengeschalteten, konventionellen Digital-Kameras bewirkt werden.

Unter dem Begriff "*Einheit*" wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung, wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:

> Fig. 1: ein erfindungsgemäßes Mess-System an einem Behälter,
> Fig. 2: eine Frontansicht der Antennen-Anordnung des erfindungsgemäßen Füllstandsmessgerätes.

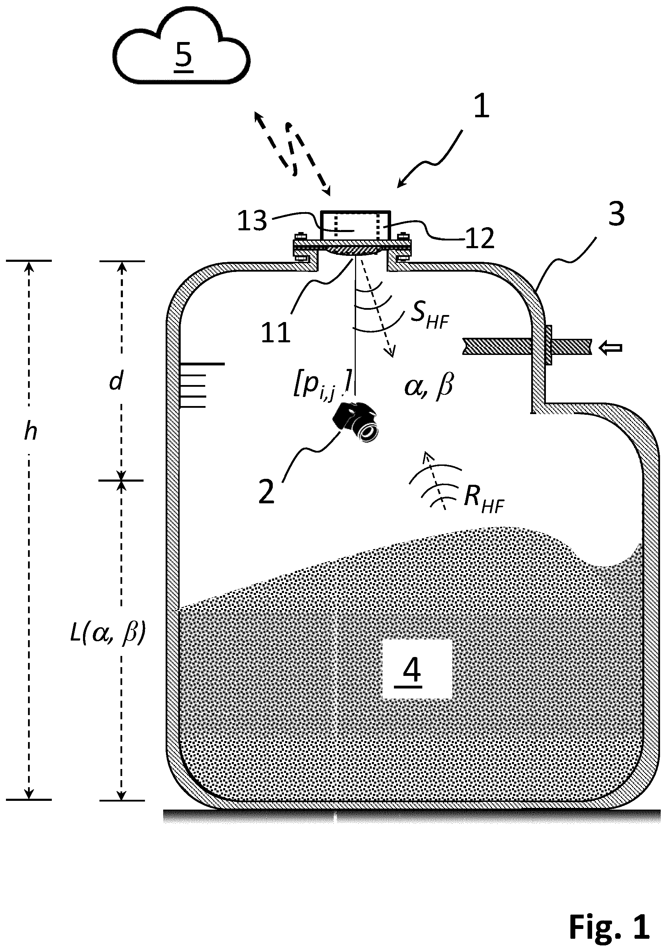

Zum Verständnis der Erfindung ist in Fig. 1 ein Behälter 3 mit einem Füllgut 4 gezeigt, dessen Füllvolumen zu erfassen ist. Dabei beruht die Füllvolumen-Bestimmung erfindungsgemäß darauf, mittels eines Mess-Systems im entleerten Zustand des Behälters 3 zunächst (zumindest bis zur Höhe h des Maximal-Füllstandes $L_{max}$ des Füllgutes 4) die Geometrie des Behälter-Inneren zu ermitteln. Im nachfolgenden Betrieb kann mittels der hinterlegten Behälter-Geometrie und des aktuell gemessenen Füllstandswertes $L(\alpha, \beta)$ bei (teil-) befülltem Behälter 4 das momentane Füllvolumen ermittelt werden.

Dabei kann der Behälter 3 je nach Art und Einsatzgebiet bis zu mehr als 100 m hoch sein.

Wie in Fig. 1 schematisch gezeigt wird, ergeben sich im Behälter-Inneren oftmals auch Hinterschnitte, die beispielsweise aufgrund der äußeren Einbausituation des Behälters 3 erforderlich sind. Somit ist es zumindest in diesen Fällen nicht praktikabel, die Behältergeometrie, mittels welcher das Füllvolumen in Bezug zum Füllstand $L(\alpha, \beta)$ gesetzt werden kann, auf theoretischen Weg zu ermitteln. Daher umfasst das Mess-System eine 3D-Kamera 2, mittels welcher im entleerten Zustand des Behälters 3 zunächst 3D-Bilder $[p_{i,j}]$ der entsprechenden Teilbereiche des Behälter-Inneren aufgenommen werden. Aus den 3D-Bildern $[p_{i,j}]$ wird ein Datensatz erstellt, welcher die 3D-Koordinaten bzw. hieraus die Geometrie des Behälter-Inneren bis mindestens zum Maximalfüllstand $L_{max}$ wiedergibt. Zur Weiterverarbeitung kann aus diesem Datensatz gegebenenfalls auch ein komplettes, digitales Raum-Model erstellt werden. Um die 3D-Bilder aufnehmen zu können, wird die 3D-Kamera 2 ggf. an variablen Positionen innerhalb des Behälters 3 bzw. an einer geeigneten Öffnung des Behälters 3 positioniert, so dass nach der Aufnahme der 3D-Bilder $[p_{i,j}]$ keine verschatteten Teilbereiche des Behälter-Inneren durch etwaige Hinterschnitte verbleiben. Damit zur späteren Berechnung der Geometriedaten bzw. des Raum-Models die korrespondierende Position und/oder Orientierung der 3D-Kamera 2 innerhalb des Behälters 3 bestimmbar ist, können der 3D-Kamera 2 beispielsweise entsprechende Beschleunigungs- bzw. Inertial-Sensoren zugeordnet sein.

Zur Bestimmung des Füllstandes $L(\alpha, \beta)$ umfasst das Mess-System ein Radar-basiertes Füllstandsmessgerät 1, das in einer bekannten Einbauhöhe h oberhalb des Füllgutes 4 am Behälter 3 angebracht ist. Das Füllstandsmessgerät 1 ist so am Behälter 3 ausgerichtet und befestigt, dass es über eine Antennen-Anordnung 11 entsprechende Radar-Signale $S_{HF}$ in Bezug zu einer vertikalen Achse in Richtung der Oberfläche des Füllgutes 2 aussendet. Nach Reflektion der Radar-Signale $S_{HF}$ an der Füllgut-Oberfläche empfängt das Füllstandsmessgerät 1 die reflektierten Radar-Signal $R_{HF}$ über die Antennen-Anordnung 11 in Abhängigkeit des Abstandes $d(\alpha, \beta)$ zwischen Füllstandsmessgerät 1 und Füllgut-Oberfläche gemäß

$$d(\alpha, \beta) = h - L(\alpha, \beta)$$

Wie in Fig. 1 angedeutet wird, ist die Oberfläche des Füllgutes 4 nicht planar. Dies kann insbesondere bei Schüttgut-artigen Füllgütern 4 eintreten, bspw. wenn sich beim Befüllen des Behälters 3 Schüttkegel bilden. Daneben kann es beim Abpumpen des Füllgutes 4 auch zu Vertiefungstrichtern an der Füllgut-Oberfläche kommen. Aus diesem Grund ist das Füllstandsmessgerät 1 ausgelegt, um den Füllstand L innerhalb eines definierten Raumwinkelbereichs [α; β] in Form eines dreidimensionalen Füllstands-Profils $L(\alpha, \beta)$ zu bestimmen. Als primäres Messergebnis ermittelt das Füllstandsmessgerät 1 pro Messung entsprechende Koordinaten-Daten eines Punkte-Rasters auf der Füllgut-Oberfläche. Hieraus wird mittels Interpolation der Koordinaten-Daten das Füllstandsprofil $L(\alpha, \beta)$ als dreidimensionales Oberflächenmodel generiert. Da sich die senkrecht zueinander verlaufenden Winkel α, β des Raumwinkelbereichs [α; β] jeweils auf die vom Füllstandsmessgerät 1 ausgehende, vertikale Achse beziehen, liegt das Füllstands-Profil $L(\alpha, \beta)$ bzw. die zugrundeliegenden Koordinaten-Daten ursprünglich in Form von Polar-Koordinaten α; β vor. Zur Umrechnung des Polarkoordinaten-basierten Füllstands-Profils $L(x, y)$ in ein kartesisches Koordinaten-System kann der jeweilige Winkel α, β (da dieser wie auch die jeweils gemessene Entfernung $d(\alpha, \beta)$ bekannt ist, da vom Füllstandsmessgerät 1 gemessen) mittels gängiger Verfahren der Koordinaten-Transformation umgerechnet werden.

Zur Raumwinkel-abhängigen Bestimmung des Füllstandes $L(\alpha, \beta)$ ist in einer Sende-/Empfang-Einheit 12 des Füllstandsmessgerätes 1, welche die Antennen-Anordnung 11 ansteuert, als Prinzip zur digitalen Strahlformung das MIMO-Prinzip implementiert. Das heißt, die Sende-/Empfang-Einheit 12 erzeugt die auszusendenden Radar-Signale $S_{HF}$ gemäß des definierten MIMO-Prinzips und erstellt anhand der Empfangs-Signale $R_{HF}$ auf Basis MIMO-Prinzips das Raumwinkel-abhängige Füllstands-Profil $L(\alpha, \beta)$. Hierdurch kann das Füllstands-

messgerät 1 innerhalb des Raumwinkelbereichs $[\alpha; \beta]$ jedem Raumwinkel $\alpha$; $\beta$ einen entsprechenden Füllstandswert $L(\alpha; \beta)$ zuordnen. Es versteht sich von selbst, dass in der Sende-/Empfangs-Einheit 12 im Rahmen der Erfindung anstelle des MIMO-Prinzips auch jegliches andere (digitale) Strahlformungsprinzip implementiert sein kann.

Über eine Schnittstelle, wie etwa "PROFIBUS", "HART" oder "Wireless HART" kann das Füllstandsmessgerät 1 mit einer übergeordneten Einheit 4, wie z. B. einem Prozessleitsystem oder einem dezentrale Datenspeicher verbunden sein. Hierüber kann das Füllstands-Profil $L(x, y)$; $L(\alpha, \beta)$ übermittelt werden, beispielsweise um etwaige Zu- oder Abflüsse des Behälters 3 zu steuern. Daneben können auch anderweitige Informationen, beispielsweise bezüglich des allgemeinen Betriebszustandes des Füllstandsmessgerätes 1 kommuniziert werden. Im Rahmen der Erfindung kann die Schnittstelle jedoch insbesondere auch dazu dienen, innerhalb des Mess-Systems eine ggf. direkte Kommunikation zur 3D-Kamera 2 herzustellen.

Im Falle einer direkten Kommunikation zwischen dem Füllstandsmessgerät 1 und der 3D-Kamera 2 ist es beispielsweise möglich, dass die von der 3D-Kamera 2 ermittelten 3D-Bilder $[p_{i,j}]$, die zur Ermittlung der Behälter-Geometrie dienen, dem Füllstandsmessgerät 1 übermittelt werden. In diesem Fall kann beispielsweise eine entsprechend ausgelegte Auswertungs-Einheit 12 des Füllstandsmessgerätes 1 anhand des zumindest einen 3D-Bildes $[p_{i,j}]$ den Datensatz das digitale Raum-Model erstellen, anhand dessen die Geometrie des relevanten Teilbereichs des Behälter-Inneren repräsentiert wird, um hieraus in Verbindung mit dem jeweils aktuellen Füllstands-Profil $L(\alpha, \beta)$ wiederum das momentane Füllvolumen zu bestimmen. Korrespondierend hierzu ist es auch denkbar, dass der Datensatz bzw. das Rum-Model, mittels dem die Geometrie des relevanten Teilbereichs des Behälter-Inneren beschrieben wird, bereits in einer entsprechenden Auswertungs-Einheit der 3D-Kamera 2 erstellt wird, bevor dies zur Bestimmung des Füllvolumens an das Füllstandsmessgerät 1 übermittelt wird.

Im Gegensatz zu direkter Kommunikation zwischen dem Füllstandsmessgerät 1 und der 3D-Kamera 2 wiederum auch möglich, das jeweils aktuelle Füllstands-Profil $L(\alpha, \beta)$ vom Füllstandsmessgerät 1 und entweder die 3D-Bilder $[p_{i,j}]$ oder bereits den errechneten Behältergeometrie-Datensatz von der 3D-Kamera 2 an die übergeordnete Einheit 5 zu übertragen. In diesem Fall kann die übergeordnete Einheit 5 als Auswertungs-Einheit fungieren, um anhand der 3D-Bilder $[p_{i,j}]$ die Behälter-Geometrie zu bestimmen, bzw. um hieraus in Verbindung mit dem jeweils aktuellen Füllstands-Profil $L(\alpha, \beta)$ das momentane Füllvolumen zu bestimmen.

Je nachdem, in welcher Einheit anhand der Geometrie des Behälter-Inneren und des Füllstands-Profils $L(\alpha, \beta)$ das Füllvolumen bestimmt wird, können dort zudem insbesondere durch Abgleich des Füllstands-Profils $L(\alpha, \beta)$ mit der Geometrie des Behälter-Inneren etwaige Winkelfehler und/oder Mehrdeutigkeiten des Füllstandsmessgerätes 1 kompensiert werden.

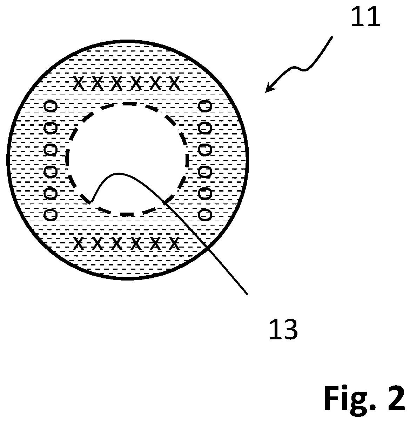

Wie in Fig. 1 angedeutet wird, ist das Füllstandsmessgerät 1 mit einer durchgehenden Durchführung 13 ausgelegt, so dass die 3D-Kamera 2 zur Aufnahme der erforderlichen 3D-Bilder $[p_{i,j}]$ durch die Durchführung 13 hindurch bspw. an einem Teleskop-Stab in das Behälter-Innere hinabgelassen und entsprechend geschwenkt werden kann. Nach Aufnahme der 3D-Bilder $[p_{i,j}]$ bzw. vor Befüllen des Behälters 3 wird die 3D-Kamera 2 aus dem Behälter-Inneren entfernt. Eine Frontal-Ansicht auf die hierauf ausgelegte Antennen-Anordnung 11 ist in Fig. 2 gezeigt: Bei dieser Ausführungsvariante sind die Sende- und Empfangs-Antennen der Antennen-Anordnung 11 um die kreisrunde Durchführung 13 herum angeordnet. Dabei sind die einzelnen Sende-bzw. Empfangs-Antennen in jeweils zwei geraden Reihen, die tangential außerhalb der kreisförmigen Durchführung 13 verlaufen und an der Durchführung 13 jeweils gegenüberliegen, angeordnet. Im Gegensatz zu der in Fig. 1 und Fig. 2 gezeigten Ausführungsvariante des erfindungsgemäßen Füllstandsmessgerätes 1 mit integrierter Durchführung 13 für die 3D-Kamera ist es ebenso denkbar, die 3D-Kamera als festen Bestandteil der Antennen-Anordnung 11 auszulegen, beispielsweise anstelle der Durchführung 13 mittig zwischen den reihig angeordneten Sende- und Empfangs-Antennen. Bei dieser nicht näher dargestellten Ausführungsvariante ist allerdings das potenzielle Sichtfeld zur Aufnahme der 3D-Bilder $[p_{i,j}]$ vermindert, so dass das Füllstands-Profil $L(\alpha, \beta)$ eventuell lediglich an Behältern 3 mit geringer geometrischer Komplexität bestimmt werden kann.

## Bezugszeichenliste

| | |
|---|---|
| 1 | Füllstandsmessgerät |
| 2 | 3D-Kamera |
| 3 | Behälter |
| 4 | Füllgut |
| 5 | Übergeordnete Einheit |
| 11 | Antennen-Anordnung |
| 12 | Auswertungs-Einheit |
| 13 | Durchführung |
| d | Entfernung |
| h | Einbauhöhe |
| $L(\alpha, \beta)$ | Füllstands-Profil |
| $[p_{i,j}]$ | 3D-Bild |
| $R_{HF}$ | Reflektiertes Radar-Signal |
| $S_{HF}$ | Radar-Signal |
| $\alpha, \beta$ | Raumwinkel |

## Patentansprüche

**1.** Mess-System zur Bestimmung eines Füllvolumens eines Füllgutes (4) in einem Behälter (3), folgende Komponenten umfassend:

- Ein Radar-basiertes Füllstandsmessgerät (1) zur Erstellung eines Füllstands-Profils (L($\alpha$, $\beta$)) der Füllgut-Oberfläche, mit

  ◦ einer Antennen-Anordnung (11), mittels welcher gemäß eines digitalen Strahlformungsprinzips Radar-Signale ($S_{HF}$) in Richtung des Füllguts (2) aussendbar sind, und mittels welcher nach Reflektion des Radar-Signals ($S_{HF}$) an der Füllgut-Oberfläche entsprechende Empfangs-Signale ($R_{HF}$) empfangbar sind,
  ◦ einer Sende-/Empfangs-Einheit (10), die ausgelegt ist, um die Radar-Signale ($S_{HF}$) gemäß des Strahlformungs-Prinzips zu erzeugen, und um gemäß dieses Strahlformmungs-Prinzips zumindest anhand der Empfangs-Signale ($R_{HF}$) das Raumwinkel-abhängige Füllstands-Profil (L($\alpha$, $\beta$)) zu erstellen, und

- eine 3D-Kamera (2), die derart positionierbar ist, um zumindest ein 3D-Bild ($[p_{i,j}]$) von zumindest einem Teilbereich des Behälter-Inneren aufzunehmen, wobei die 3D-Kamera (2) als eine Komponente der Antennen-Anordnung (11) ausgelegt oder derart um eine insbesondere kreisrunde Durchführung (13) des Füllstandsmessgerätes (1) herum ausgebildet ist, so dass die 3D-Kamera (2) durch die Durchführung (13) hindurch in das Innere des Behälters (3) richtbar ist,
- eine Auswertungs-Einheit (12), die ausgelegt ist,

  ◦ um anhand des zumindest einen 3D-Bildes ($[p_{i,j}]$) einen Datensatz, der die Geometrie von zumindest dem Teilbereich des Behälter-Inneren repräsentiert, zu erstellen, und
  ◦ um anhand des Datensatzes und anhand des Füllstands-Profils (L($\alpha$, $\beta$)) das Füllvolumen zu bestimmen.

2. Mess-System einem der Ansprüche 1, wobei die Auswertungs-Einheit (12) als eine Komponente des Füllstandsmessgerätes (1) ausgelegt ist.

3. Mess-System nach Anspruch 1 oder 2, wobei die 3D-Kamera als ToF-Sensor ausgelegt ist.

4. Mess-System nach zumindest einem der vorhergehenden Ansprüche, wobei die Sende-/Empfangs-Einheit (10) der Auswertungs-Einheit (12) ausgelegt ist, die Radar-Signale ($S_{HF}$) gemäß des MIMO-Prinzips zu erzeugen und das Füllstands-Profil (L($\alpha$, $\beta$)) gemäß des MIMO-Prinzips zu erstellen.

5. Verfahren zur Bestimmung eines Füllvolumens eines Füllgutes (4) in einem Behälter (3) mittels des Mess-Systems nach einem der vorhergehenden Ansprüche, folgende Verfahrensschritte umfassend:

- Aufnahme von zumindest einem 3D-Bild ($[p_{i,j}]$) von zumindest einem Teilbereich des Behälter-Inneren mittels der 3D-Kamera (2),
- Erstellung eines Datensatzes, der die Geometrie von zumindest dem Teilbereich des Behälter-Inneren repräsentiert, anhand des zumindest einen 3D-Bildes ($[p_{i,j}]$),
- Erstellung eines Raumwinkel-abhängigen Füllstands-Profils (L($\alpha$, $\beta$)) der Füllgut-Oberfläche mittels des Füllstandsmessgerätes (1), und
- Bestimmung des Füllvolumens anhand des Datensatzes und anhand des Füllstands-Profils (L($\alpha$, $\beta$)).

6. Verfahren nach Anspruch 5, wobei des zumindest einen 3D-Bild aufgenommen wird, sofern der Behälter (3) zumindest im entsprechenden Teilbereich leer ist.

**Claims**

1. A measuring system for determining a fill volume of a filling material (4) in a container (3), comprising the following components:

- A radar-based fill level measuring device (1) for creating a fill level profile (L($\alpha,\beta$)) of the surface of the filling material, with

  • an antenna assembly (11), which can be used to transmit radar signals ($S_{HF}$) toward the filling material (2) according to a digital beamforming principle, and which can then be used to receive corresponding receive signals ($R_{HF}$) once the radar signal ($S_{HF}$) has been reflected on the surface of the filling material,
  • a transmitter/receiver unit (10), which is configured to generate the radar signals ($S_{HF}$) according to the beamforming principle and, according to this beamforming principle, to create the solid angle-dependent fill level profile (L($\alpha,\beta$)) at least on the basis of the receive signals ($R_{HF}$), and

- a 3D camera (2), which can be positioned so that it takes at least one 3D image ($[p_{i,j}]$) of at least one partial area of the inside of the container, wherein the 3D camera (2) is configured as a component of the antenna assembly (11) or is formed around an, in particular circular, through-hole (13) of the fill level measuring device (1) so that the 3D camera (2) can be directed through the through-hole (13) into the inside of the container (3),
- an evaluation unit (12), which is configured to

    • create a data record representing the geometry of at least the partial area of the inside of the container based on the at least one 3D image ($[p_{i,j}]$), and
    • determine the fill volume based on the data record and based on the fill level profile ($L(\alpha, \beta)$).

2. The measuring system as claimed in claim 1, wherein the evaluation unit (12) is configured as a component of the fill level measuring device (1).

3. The measuring system as claimed in claim 1 or 2, wherein the 3D camera is configured as a ToF sensor.

4. The measuring system as claimed in at least one of the preceding claims, wherein the transmitter/receiver unit (10) of the evaluation unit (12) is configured to generate the radar signals ($S_{HF}$) according to the MIMO principle and to create the fill level profile ($L(\alpha, \beta)$) according to the MIMO principle.

5. A method for determining a fill volume of a filling material (4) in a container (3) using the measuring system as claimed in one of the preceding claims, comprising the following process steps:

    - Taking at least one 3D image ($[p_{i,j}]$) of at least one partial area of the inside of the container using the 3D camera (2),
    - creating a data record representing the geometry of at least the partial area of the inside of the container based on the at least one 3D image ($[p_{i,j}]$),
    - creating a solid angle-dependent fill level profile ($L(\alpha, \beta)$) of the surface of the filling material using the fill level measuring device (1), and
    - determining the fill volume based on the data record and based on the fill level profile ($L(\alpha, \beta)$).

6. The method as claimed in claim 5, wherein the at least one 3D image is taken if the container (3) is empty at least in the corresponding partial area.

**Revendications**

1. Système de mesure destiné à la détermination d'un volume de remplissage d'un produit (4) dans un réservoir (3), lequel système comprend les composants suivants :

    - Un transmetteur de niveau (1) radar, lequel est destiné à créer un profil de niveau ($L(\alpha, \beta)$) de la surface du produit, avec

        ◦ un agencement d'antennes (11), agencement au moyen duquel des signaux radar ($S_{HF}$) peuvent être émis en direction du produit (2) conformément à un principe numérique de formation de faisceaux, et agencement au moyen duquel des signaux de réception ($R_{HF}$) correspondants peuvent être reçus après réflexion du signal radar ($S_{HF}$) à la surface du produit,
        ◦ une unité d'émission/réception (10), laquelle unité est conçue pour générer les signaux radar ($S_{HF}$) conformément au principe de formation de faisceaux, et laquelle unité est conçue pour créer le profil de niveau ($L(\alpha, \beta)$) dépendant de l'angle solide à l'aide des signaux de réception ($R_{HF}$) conformément au principe de formation de faisceaux, et

    - Une caméra 3D (2), laquelle peut être positionnée de telle sorte à enregistrer au moins une image 3D ($[p_{i,j}]$) d'au moins une zone partielle de l'intérieur du réservoir, la caméra 3D (2) étant conçue en tant que composant de l'agencement d'antennes (11) ou la caméra 3D (2) étant positionnée autour d'un passage (13), notamment circulaire, du transmetteur de niveau (1) de telle sorte que la caméra 3D (2) puisse être ajustée à travers le passage (13) à l'intérieur du réservoir (3),
    - Une unité d'évaluation (12), laquelle est conçue

        ◦ pour créer, à l'aide de l'au moins une image 3D ($[p_{i,j}]$), un bloc de données représentant la géométrie de l'au moins une zone partielle de l'intérieur du réservoir, et
        ◦ pour déterminer le volume de remplissage à l'aide du bloc de données et à l'aide du profil de niveau ($L(\alpha, \beta)$).

2. Système de mesure selon la revendication 1, pour lequel l'unité d'évaluation (12) est conçue en tant que composant du transmetteur de niveau (1).

3. Système de mesure selon la revendication 1 ou 2, pour lequel la caméra 3D est conçue en tant que capteur ToF.

4. Système de mesure selon au moins l'une des revendications précédentes, pour lequel l'unité d'émission/réception (10) de l'unité d'évaluation (12) est conçue pour générer les signaux radar ($S_{HF}$) conformément au principe MIMO et pour créer le profil de niveau ($L(\alpha, \beta)$) conformément au principe MIMO.

5. Procédé destiné à la détermination d'un volume de remplissage d'un produit (4) dans un réservoir (3) au moyen du système de mesure selon l'une des revendications précédentes, lequel procédé comprend les étapes suivantes :

> - Enregistrement d'au moins une image 3D ($[p_{i,j}]$) d'au moins une zone partielle de l'intérieur du réservoir au moyen de la caméra 3D (2),
> - Création d'un bloc de données représentant la géométrie de l'au moins une zone partielle de l'intérieur du réservoir, en s'appuyant sur l'au moins une image 3D ($[p_{i,j}]$),
> - Création d'un profil de niveau ($L(\alpha, \beta)$) de la surface du produit au moyen du transmetteur de niveau (1), et
> - Détermination du volume de remplissage à l'aide du bloc de données et à l'aide du profil de niveau ($L(\alpha, \beta)$).

6. Procédé selon la revendication 5, pour lequel l'au moins une image 3D est enregistrée dans la mesure où le réservoir (3) est au moins vide dans la zone partielle correspondante.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013108490 A1
- US 20180106602 A1
- DE 102018102366 A1

**In der Beschreibung aufgeführte Nicht-Patentliteratur**

- **JIAN LI**. *MIMO Radar Signal Processing*, 2009